# DEMANDE DE BREVET EUROPEEN

(11) **EP 1 201 116 A1**
(43) Date de publication de la demande: **02.05.2002**
(21) Numéro de dépôt: 01402775.9
(22) Date de dépôt: 25.10.2001
(51) Int. Cl.: A01G 17/02

(54) **Dispositif de coupe destiné notamment à l'épamprage**

(30) Priorité: 27.10.2000 FR 0013847; 22.03.2001 FR 0103976
(71) Demandeur: Avidor SA, 1029 Villars-Ste-Croix (CH)
(72) Inventeur: Brugere, Marc, 4700 Agen (FR); Ducret, Jean-Luc, 1801 Mont Pelerin (FR)
(74) Mandataire: Dronne, Guy

(57) **Abrégé**

L'invention concerne un dispositif de coupe destiné notamment à l'épamprage et/ou à l'ébourgeonnage de végétaux plantés dans le sol, présentant un tronc sensiblement vertical. Le dispositif comprend : des moyens formant châssis (10) susceptibles d'être déplacés en translation sensiblement parallèlement au sol (18) ; au moins un moyen support (20, 22) formant tête, relié auxdits moyens formant châssis (10), présentant un axe de symétrie (A1, A2) autour duquel il est susceptible d'être entraîné en rotation, ledit axe (A1, A2) étant susceptible d'être maintenu en position oblique par rapport au sol (18) ; et, des moyens flexibles (32) formant lanières, dont les premières extrémités (34) sont solidaires dudit moyen support (20, 22) formant tête.

## Description

La présente invention concerne un dispositif de coupe destiné notamment à l'épamprage et/ou à l'ébourgeonnage de végétaux plantés dans le sol. Ces végétaux présentent un tronc sensiblement vertical sur la paroi duquel, des pousses apparaissent au cours de leur développement. Ces pousses sont généralement indésirables, car elles puisent de la sève et elles ne sont d'aucune utilité dans le cycle végétatif de la plante.

Un domaine d'application, dudit dispositif, envisagé est celui de l'épamprage de la vigne où les pieds de vigne sont disposés en rangs parallèles les uns par rapport aux autres.

Des dispositifs d'épamprage comprenant deux têtes en regard l'une de l'autre, sont connues. Elles présentent chacune un plateau à la surface duquel sont fixées, perpendiculairement, des courroies, ledit plateau étant entraîné en rotation autour de son axe central, orthogonal à la surface du plateau. Les plateaux sont disposés de chaque côté du pied de vigne, leur axe central sensiblement horizontal, de façon que les extrémités libres des courroies des deux plateaux fouettent ledit pied pour en retirer les pampres, lorsqu'ils sont entraînés en rotation.

Les extrémités libres des courroies viennent à la fois fouetter la partie supérieure du pied de vigne et la partie inférieure puisque les plateaux sont disposés verticalement et sensiblement parallèles audit pied.

Cependant, la rotation des plateaux tend à écarter l'extrémité libre des courroies de l'axe central, de sorte que les courroies sont susceptibles d'être entraînées sensiblement parallèlement aux plateaux si leur vitesse de rotation est trop importante et de ne plus agir sur le pied de vigne.

Un problème qui se pose et que vise à résoudre la présente invention, est alors de réaliser deux têtes, munies de lanières, qui non seulement permettent de s'affranchir du contrôle de la rigidité des courroies mais aussi de la vitesse de rotation des têtes.

A cet effet, la présente invention propose un dispositif de coupe comprenant : des moyens formant châssis susceptibles d'être déplacés en translation sensiblement parallèlement au sol ; au moins un moyen support formant tête, relié auxdits moyens formant châssis, présentant un axe de symétrie autour duquel il est susceptible d'être entraîné en rotation par des moyens moteurs, ledit axe étant susceptible d'être maintenu en position oblique par rapport au sol et dirigé vers la partie supérieure dudit tronc ; et, des moyens flexibles formant lanières, dont les premières extrémités sont solidaires dudit moyen support formant tête de façon que l'extrémité libre desdits moyens flexibles, sensiblement radiales par rapport audit axe de symétrie lorsque ledit moyen support formant tête est entraîné en rotation, soient susceptibles de venir fouetter obliquement au moins une portion de la paroi dudit tronc, par quoi lesdits pampres ou lesdits bourgeons faisant saillie de ladite portion dudit tronc sont sectionnés.

Ainsi, une caractéristique du dispositif de coupe réside dans l'orientation oblique de l'axe de symétrie du moyen support formant tête autour duquel il est entraîné en rotation, par rapport au sol et du mode d'action desdites extrémités libres desdits moyens flexibles formant lanières qui sont radiales par rapport à l'axe de symétrie lorsque le moyen support est entraîné en rotation. De la sorte, les moyens flexibles formant lanières sont sensiblement perpendiculaires à l'axe de rotation lorsque le moyen support a atteint une vitesse déterminée et ils gardent cette position aux vitesses supérieures, ce qui permet une plus grande maîtrise de la position des moyens de coupe par rapport au dispositif de l'art antérieur et d'accroître l'efficacité de la coupe par augmentation de la vitesse du moyen support.

En outre, compte tenu de la position constante des moyens flexibles par rapport à l'axe de symétrie, et de sa position oblique par rapport au sol, les moyens flexibles percutent la surface de la paroi de tronc avec un angle parfaitement déterminé et constant, permettant une plus grande efficacité de coupe.

Selon un mode particulièrement avantageux de mise en oeuvre de l'invention, ledit axe de symétrie autour duquel ledit moyen support est entraîné en rotation est disposé perpendiculairement à la direction de déplacement dudit châssis. Ainsi, l'impact des moyens flexibles sur le pied est maximal sur la surface de la paroi de pied située en regard de la surface de la paroi d'un pied contigu, c'est-à-dire sur la surface de paroi de pied centrée sur le point de tangence d'une perpendiculaire à la direction de déplacement et de ladite surface. De la sorte, au moins une moitié du pourtour de ladite paroi est couvert par les moyens flexibles.

Avantageusement, ledit moyen support présente une surface externe apte à recevoir lesdites premières extrémités desdits moyens flexibles formant lanières, ladite surface externe s'étendant longitudinalement suivant ledit axe de symétrie de façon que l'extrémité libre desdites lanières, sensiblement radiales par rapport audit axe de symétrie lorsque ledit moyen support formant tête est entraîné en rotation, décrivent des plans sensiblement parallèles entre eux, espacés les uns des autres et sensiblement orthogonaux audit axe de symétrie. De la sorte, les moyens flexibles percutent le pied, simultanément à plusieurs niveaux et permettent de retirer les pampres ou les bourgeons sur une hauteur déterminée de pied qui est fonction de l'étendue de ladite surface externe et du nombre de moyens flexibles y reliés.

Selon un mode particulier de mise en oeuvre, ledit moyen support formant tête se compose d'une pyramide octogonale tronquée sur laquelle sont fixés lesdits moyens formant lanières. Préférentiellement, ladite pyramide octogonale tronquée présente, une grande base fixée de manière démontable sur l'arbre desdits moyens moteurs, une petite base correspondant au sommet de ladite pyramide, et des parois latérales constituées de 8 trapèzes réguliers. De la sorte, comme on l'expliquera plus en détails dans la suite de la description, des moyens flexibles sont disposés dans chacune desdites parois latérales selon une disposition particulière.

Selon un autre mode particulier de mise en oeuvre de l'invention, ledit moyen support formant tête comporte un élément de symétrie sensiblement hémisphérique, ledit axe de symétrie étant sensiblement confondu avec l'axe de symétrie dudit élément et le sommet dudit élément hémisphérique étant dirigé dans la direction opposée auxdits moyens moteurs. Ainsi, le moyen support est dépourvu d'angle vif et d'aspérité et présente une surface de forme régulière et continue, contre laquelle les divers branches ou pampres ne peuvent être retenus.

De façon particulièrement avantageuse, ledit moyen support formant tête présente des perçages susceptibles de constituer des emplacements pour fixer des supports de lanière. Préférentiellement, ledit support de lanière se compose, d'une vis sur la tête de laquelle est soudée une plaque percée en forme de U, d'une plaque percée en vis-à-vis de la plaque soudée ladite plaque percée étant susceptible de s'emboîter dans l'U et d'être boulonnée pour serrer ladite lanière. Ainsi, la vis est insérée dans ledit perçage et y est maintenu en position fixe au moyen d'un écrou. Avantageusement, lesdits perçages sont taraudés de façon à visser directement lesdits supports de lanière.

Selon un autre mode de mise en oeuvre avantageux, ledit support de lanière se compose d'une vis dont la tige est creuse en son centre de façon à insérer un moyen flexible, ladite tige se prolongeant par un tube comportant en son milieu un trou taraudé par lequel passe une vis qui traverse de part en part ladite extrémité de ladite lanière et la maintient en position fixe. Ainsi, le support de lanière, selon ce mode de mise en oeuvre est susceptible de recevoir des moyens flexibles formant lanière de section circulaire.

Selon un mode préféré de mise en oeuvre de l'invention, lesdits moyens formant châssis comportent deux moyens supports formant tête en regard l'un de l'autre, leurs axes de symétrie étant inclinés l'un par rapport à l'autre de façon que les extrémités libres de leurs lanières respectives se croisent entre elles lorsqu'ils sont entraînés en rotation dans des sens opposés l'un de l'autre. De la sorte, les moyens formant châssis sont susceptibles d'être portés au niveau d'un pied de vigne de façon que les deux moyens supports formant tête soient disposés de chaque côté du pied. Ainsi, les moyens supports formant tête étant actionnés en rotation inverse l'un de l'autre, les zones d'impact des moyens flexibles formant lanières, des moyens supports respectifs, sur la surface de la paroi du pied sont opposées. Puisque chaque zone correspond à au moins la moitié du pourtour de la paroi du pied, la totalité de la surface de la paroi est couverte par les moyens flexibles formant lanières.

Selon ce dernier mode préféré de mise en oeuvre de l'invention, avantageusement lesdits moyens formant châssis comprennent : un élément horizontal susceptible d'être déplacé en translation au-dessus desdits végétaux ; deux bras verticaux, présentant à chacune de leurs extrémités inférieures un moyen support formant tête, et reliés chacun audit élément horizontal de façon que les moyens supports formant tête soient en regard l'un de l'autre ; et, des moyens de déplacement susceptibles d'écarter lesdits bras verticaux l'un de l'autre, par quoi les moyens supports formant tête sont écartés l'un de l'autre. Ces caractéristiques des moyens formant châssis permettent de positionner le dispositif de coupe et de l'adapter à la taille du rang de pied de vigne à traiter.

Préférentiellement, toujours selon ce dernier mode préféré de mise en oeuvre de l'invention lesdits moyens formant châssis comprennent : un élément horizontal susceptible d'être déplacé en translation au-dessus desdits végétaux ; deux bras verticaux, présentant à chacune de leurs extrémités inférieures un moyen support formant tête, et reliés chacun par une pièce formant bielle audit élément horizontal de façon que les moyens supports formant tête soient en regard l'un de l'autre ; et, des moyens de déplacement susceptibles d'écarter lesdites bielles l'une de l'autre, par quoi les moyens supports formant tête sont susceptibles d'être écartés l'un de l'autre et rapprochés dudit élément horizontal. Ainsi, ledit élément horizontal étant maintenu à une distance constante du sol, les moyens supports formant têtes sont simultanément écartés du rang et relevés par rapport au sol.

D'autres particularités et avantages de l'invention ressortiront à la lecture de la description faite ci-après de modes de réalisation particuliers de l'invention, donnés à titre indicatif mais non limitatif, en référence aux dessins annexés sur lesquels :
- la Figure 1 est une vue partielle de face du dispositif de coupe conforme à l'invention, selon un premier mode de réalisation ;
- la Figure 2, est une vue de détail d'un premier élément du dispositif de coupe selon un mode particulier de mise en oeuvre ;
- la Figure 3 est une vue de détail d'un deuxième élément du dispositif de coupe, selon une première forme, susceptible d'être fixé sur le premier élément ;
- la Figure 4 est une vue de détail d'un deuxième élément selon une deuxième forme ;
- la Figure 5 est une vue de face du dispositif de coupe conforme à l'invention, selon un second mode de réalisation ;
- la Figure 6 est une vue de côté du dispositif de coupe représenté sur la Figure 5 ; et,
- la Figure 7 est une vue de face d'un élément du châssis du dispositif de coupe selon un mode particulier de mise en oeuvre.

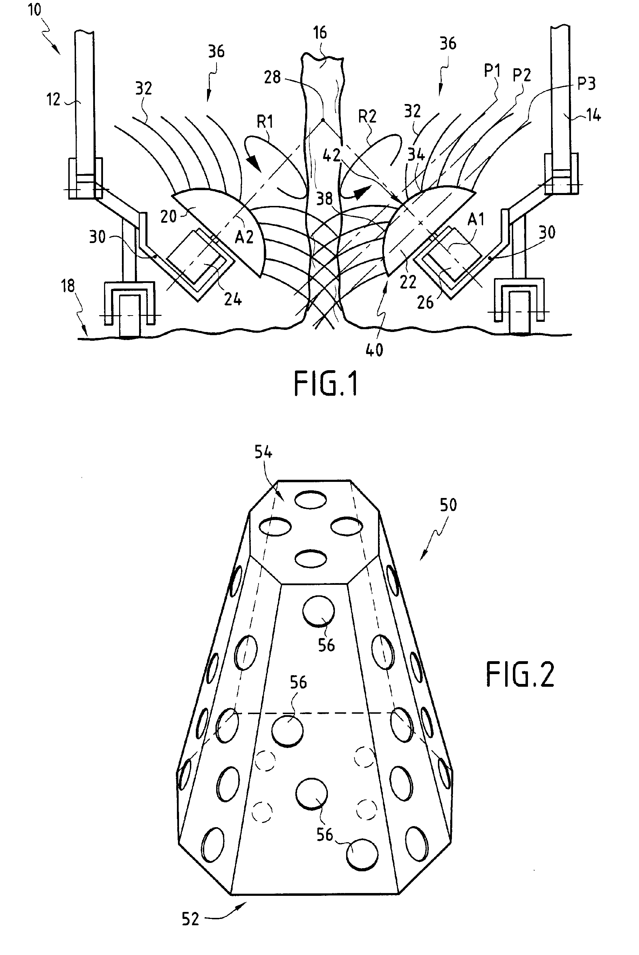

La Figure 1 illustre la partie active du dispositif de coupe conforme à l'invention, selon un premier mode de réalisation de l'invention. Il comporte un châssis 10, partiellement représenté sur la Figure 1, dont les deux bras verticaux, 12, 14 se prolongent et sont réunis dans la partie supérieure du dispositif que l'on décrira plus en détails dans la suite de la description. La Figure 1 illustre également un pied de vigne 16 et la paroi de sol de laquelle il fait saillie.

Le dispositif comprend deux moyens supports 20, 22 formant tête, reliés au châssis 10 par des moyens moteurs 24, 26. Les têtes 20 et 22 sont de forme sensiblement hémisphérique et leur axe de symétrie A1 et A2 sont respectivement confondus avec l'axe de rotation des moyens moteurs 24, 26. En outre, les axes A1 et A2 sont obliques par rapport au sol 18 et coupe le pied de vigne 16 dans une partie supérieure 28. L'angle des axes A1, A2 par rapport au sol est ajustable par des moyens de réglage non représentés qui permettent de faire pivoter les moyens moteurs 24, 26, supportant respectivement les têtes 20, 22, autour d'un axe de pivotement 30.

Les moyens supports 20, 22 formant têtes comportent des moyens flexibles 32 formant lanières dont les premières extrémités 34 sont reliés auxdites têtes 20, 22 et dont les secondes extrémités 36 sont libres. Les lanières 32 sont réparties régulièrement dans le pourtour de la surface externe 38 de ladite tête 22 ou 20, par exemple en divisant la surface en huit portions égales et en fixant une pluralité de lanières dans chaque portion. En outre, compte tenu de la forme sensiblement hémisphérique des têtes 20, 22, leur surface externe 38 s'étend longitudinalement suivant leur axe de symétrie, respectivement A2, A1. De la sorte, les pluralités de lanières 32 sont réparties également suivant l'axe de symétrie A1, A2, du bord 40 de la tête 20, 22 jusqu'au sommet 42.

Ainsi, l'extrémité libre 36 des lanières 32, sont entraînées, sous l'effet de la force centrifuge lorsque la tête 20 ou 22 est en rotation, dans des directions opposées à l'axe de symétrie A1, A2 et sont toutes dans une position radiale par rapport à l'axe A1, A2. Puisque les pluralités de lanières 32 sont réparties suivant l'axe A1, A2, elles décrivent des plans P1, P2, P3, sensiblement parallèles entre eux, espacés les uns des autres et orthogonaux à l'axe de symétrie, A1, A2. De la sorte, le pied de vigne 16 est susceptible d'être épampré ou ébourgeonné sur une hauteur déterminée puisque, comme on va l'expliquer dans la suite de la description les extrémités libres 36 des lanières ont, simultanément, des points d'impact sur une portion de hauteur déterminée de la surface du pied 16.

Sur la Figure 1, le dispositif de coupe présente deux moyens supports 20, 22 formant tête en regard l'un de l'autre, les axes de symétrie A1 et A2 étant sensiblement compris dans un même plan ou dans deux plans sensiblement parallèles entre eux. La tête 20 est entraînée en rotation selon le sens de la flèche R1 et la tête 22 est entraînée dans le sens opposé suivant la flèche R2. De la sorte, l'extrémité libre 36 des lanières 32 de la tête 22 vient percuter la paroi du pied 16 apparaissant sur la Figure 1 et l'extrémité libre 36 des lanières 32 de la tête 20 vient percuter la paroi opposée, ce qui permet un travail simultané de chaque côté du pied et un équilibrage du châssis par rapport aux forces de réaction du pied 16 contre les lanières 32 et donc contre chaque tête 20 et 22, lesdites forces de réaction étant ainsi opposées.

Les moyens supports 20, 22 formant têtes étant disposés de part et d'autre du pied 16 de façon symétrique, on va décrire uniquement l'action des lanières 32 de la tête 22 sur la paroi de pied 16 apparaissant sur la Figure 1. La même description pourrait être faite pour l'action des lanières 32 de la tête 20 sur la paroi de pied 16 opposée.

En position de travail, le dispositif de coupe est réglé de façon que les têtes 20 et 22, actionnées en rotation, soient situées à proximité des pieds 16 et que lorsque l'axe de symétrie A1, A2 des têtes 20, 22 coupe sensiblement la partie supérieure 28 du pied 16, une portion substantielle des lanières 32 viennent percuter le pied 16. Notamment, le bout de l'extrémité libre 36 des lanières 32 se situe au-delà du point d'impact du pied 16 sur la lanière 32, de façon que la lanière 32 puisse se déformer juste après l'impact et épouser sensiblement la moitié de la circonférence du pied 16. Ainsi, les lanières 32 percutent le pied 16 et sous l'effet de la vitesse, sectionne les pousses qui font saillie du pied 16. De plus, les lanières après l'impact, grâce à l'angle qu'elles forment avec le pied 16, sont entraînées contre le pied 16 en-dessous de l'impact, ce qui permet le balayage violent d'une portion de paroi et provoque également l'arrachage des pousses, des bourgeons et les vielles écorces.

Compte tenu de la répartition des lanières 32 sur la surface externe 38 de la tête 20, 22 suivant l'axe de symétrie A1, A2, les points d'impact des lanières 32 sont répartis longitudinalement le long du pied 16, permettant la couverture d'une portion substantielle de la surface de la paroi du pied 16. En outre, l'épamprage ou l'ébourgeonnage peut être réalisé avec des intensités différentes en fonction de la section des pousses à retirer, en augmentant ou en diminuant la vitesse des moyens moteurs. Quelle que soit la vitesse de ces moyens moteurs, au delà d'un certain seuil, la position radiale des lanières 32 reste constante par rapport à la tête 20, 22.

On comprend que les deux têtes 20, 22 agissent sur la surface des parois opposées du pied 16, et que le déplacement du châssis 10 parallèlement au sol 18 de façon que les deux têtes 20 et 22 se déplacent de chaque côté du pied 16 à une même distance, permet l'épamprage et l'ébourgeonnage du pied 16 sur toute sa circonférence sur une hauteur déterminée par la répartition des lanières suivant l'axe A1, A2.

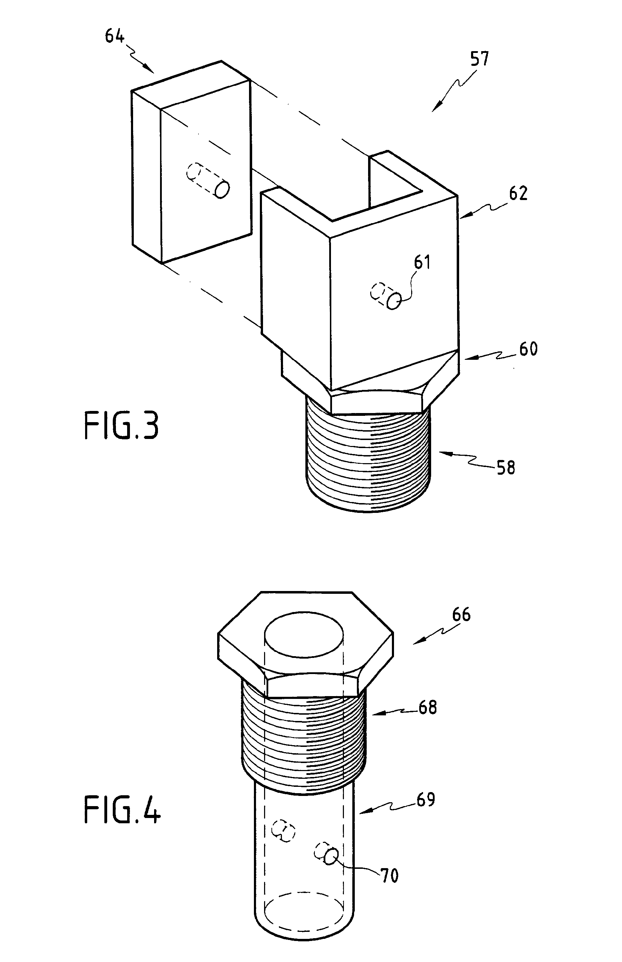

On se référera à la Figure 2 pour décrire un mode particulier de mise en oeuvre des moyens supports formant tête dans lequel ils comprennent un élément pyramidal tronqué octogonal 50. Ce dernier présente une grande base 52 qui est solidarisée perpendiculairement à l'arbre des moyens moteurs, et une petite base 54 libre. Chacune des faces de l'élément pyramidal 50 présente des perçages 56 dans lesquels se fixent des supports de lanière que l'on va décrire en référence aux Figures 3 et 4.

Selon une première forme, le support de lanière 57 comprend une vis 58 sur la tête 60 de laquelle est soudée une plaque en forme de U présentant un premier perçage 62, l'axe de la vis 58 étant perpendiculaire aux branches de l'U. Il comprend également, une seconde plaque percée 64 en vis-à-vis de la première plaque 62 percée susceptible de s'emboîter dans l'U et d'être boulonnée pour serrer ladite lanière. De la sorte, des lanières de section carrée, sont efficacement solidarisées au support de lanière 57.

Les supports de lanière 57 sont, eux-mêmes maintenus en position fixe au moyen support formant tête par l'insertion de la vis 58 dans un perçage et par vissage d'un écrou s'appliquant sur la surface opposée à la surface externe des moyens supports. Selon un mode préféré de mise en oeuvre, les perçages 56 sont taraudés, et la vis 58 est directement vissée dans le moyen support formant tête.

Selon une seconde forme, le support de lanière 66 se compose d'une vis 68 dont la tige est creuse en son centre de façon à insérer un moyen flexible, ladite tige se prolongeant par un tube 69 comportant en son milieu un trou taraudé 70 par lequel passe une vis qui traverse de part en part ladite extrémité de ladite lanière et la maintient en position fixe. Ainsi, cette seconde forme permet de fixer des lanières 32 de section circulaire de façon optimale. Les supports de lanière 66 sont vissés dans les perçages 56 des moyens supports depuis leur surface opposée à leur surface externe 38.

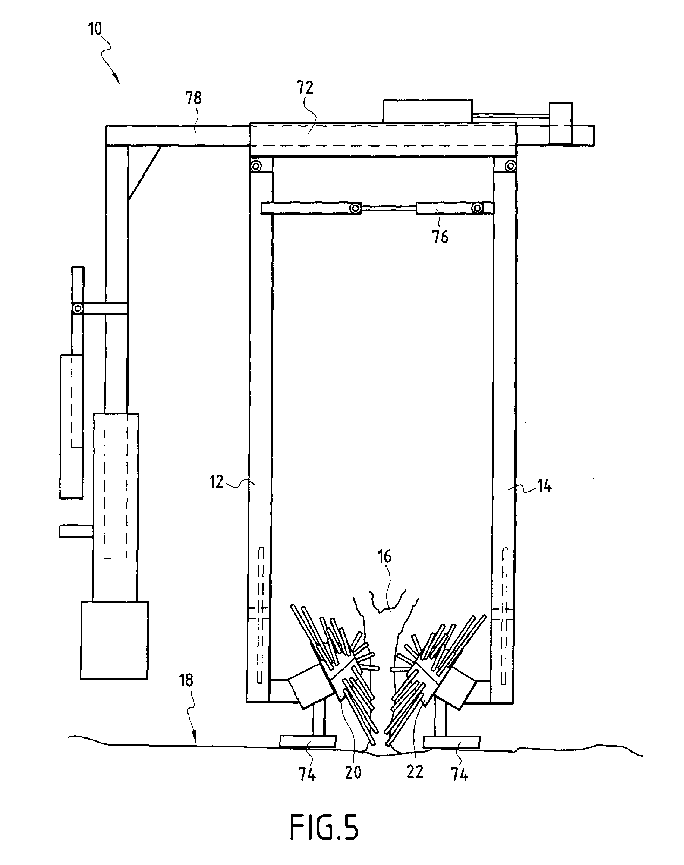

En référence à la Figure 5 on décrira un dispositif de coupe selon un second mode de réalisation, muni d'un châssis complet 10. On retrouve sur cette Figure 5, les deux bras verticaux 12 et 14 montés articulés à chacune des extrémités d'un élément horizontal 72. Les bras verticaux présentent à chacune de leur extrémité inférieure le moyen support formant tête, 20, 22. En outre, le châssis comporte des patins de contact 74 réglable en hauteur, destiné à maintenir en position constante les têtes 20 et 22 par rapport au sol 18 et par rapport au pied de vigne 16.

Les deux bras verticaux 12 et 14 sont reliés entre eux par un vérin 76 commandable, destiné à écarter l'un de l'autre les moyens supports formant têtes 20 et 22. Avantageusement, lorsque le dispositif de coupe est déplacé en translation dans les rangs de vigne, un système de capteur commande de rapprochement des têtes 20, 22 l'une vers l'autre lorsqu'elles sont au regard d'un pied, de façon n'agir que lorsque c'est nécessaire et à ne pas endommager la vigne entre les pieds.

Préférentiellement, l'élément horizontal 72 est monté à coulissement commandable sur un portique 78 qui est maintenu en position fixe sur des moyens de déplacement de type tracteur agricole. Le réglage du coulissement permet d'ajuster le centrage du dispositif de coupe sur le rang de vigne.

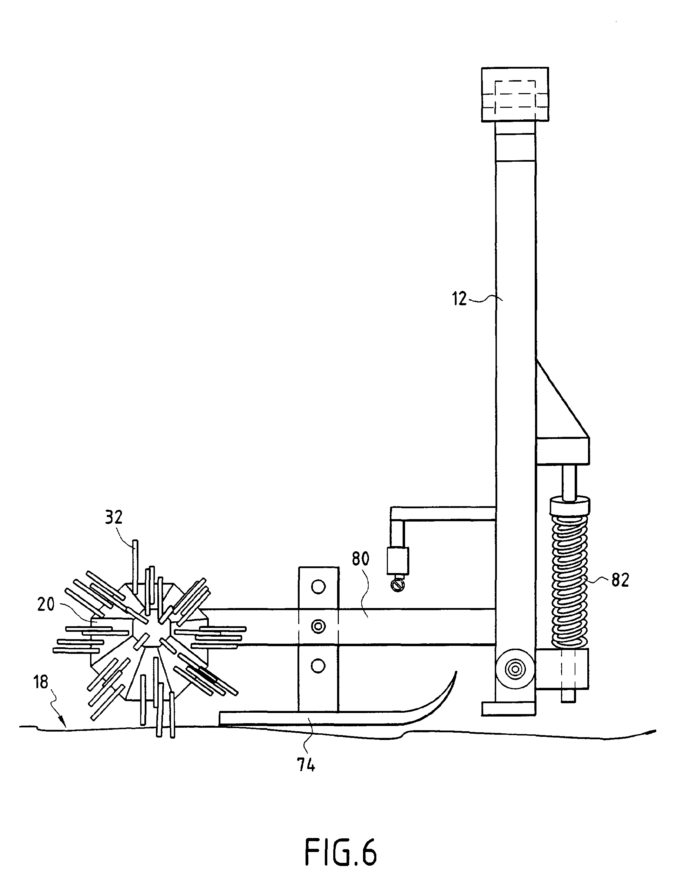

On a représenté sur la Figure 6 une vue de côté, interne du dispositif de coupe sur laquelle on retrouve le moyen support formant tête 20 muni de ses moyens flexibles formant lanières 32 et des patins de contact 74 réglables. En outre, la tête 20 est montée sur une structure horizontale 80 qui est montée articulée à l'extrémité du bras vertical 12 et guidée par des moyens élastiques 82. De la sorte, la tête 20 est maintenue sensiblement à proximité des pieds de vigne et sa position n'est pas perturbée par les obstacles présents sur le sol 18.

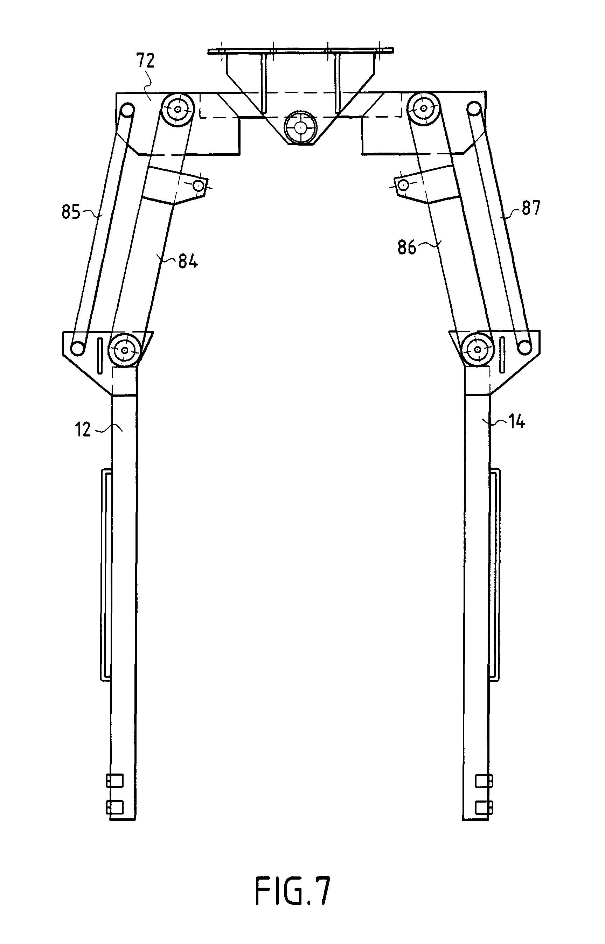

Selon un mode particulier de mise en oeuvre du châssis tel que représenté sur la Figure 7, les bras verticaux 12 et 14 sont reliés chacun par une paire de pièces formant bielle respectivement 84 85 et 86, 87 audit élément horizontal 72. De la sorte, lorsque les bielles 84 et 86 sont écartées l'une de l'autre par des moyens de déplacement non représentés, les bras 12 et 14 sont écartés l'un de l'autre et maintenus en position verticale et parallèles entre eux. Ainsi, les têtes situées à l'extrémité des bras sont écartées l'une de l'autre et donc de part et d'autre du rang de vigne tout en étant éloignées du sol.

Cette caractéristique permet d'écarter par une simple commande les moyens supports, à la fois du sol et des pieds de vigne.

## Revendications

1. Dispositif de coupe destiné notamment à l'épamprage et/ou à l'ébourgeonnage de végétaux plantés dans le sol, présentant un tronc sensiblement vertical, **caractérisé en ce qu'**il comprend :
- des moyens formant châssis (10) susceptibles d'être déplacés en translation sensiblement parallèlement au sol (18) ;
- au moins un moyen support (20, 22) formant tête, relié auxdits moyens formant châssis (10), présentant un axe de symétrie (A1, A2) autour duquel il est susceptible d'être entraîné en rotation par des moyens moteurs (24, 26), ledit axe (A1, A2) étant susceptible d'être maintenu en position oblique par rapport au sol (18) et dirigé vers la partie supérieure (28) dudit tronc (16) ; et,
- des moyens flexibles (32) formant lanières, dont les premières extrémités (34) sont solidaires dudit moyen support (20, 22) formant tête de façon que l'extrémité libre (36) desdits moyens flexibles (32), sensiblement radiales par rapport audit axe (A1, A2) de symétrie lorsque ledit moyen support (20, 22) formant tête est entraîné en rotation, soient susceptibles de venir fouetter obliquement au moins une portion de la paroi dudit tronc (16), par quoi lesdits pampres ou lesdits bourgeons faisant saillie de ladite portion dudit tronc (16) sont sectionnés.

2. Dispositif de coupe selon la revendication 1, **caractérisé en ce que** ledit axe (A1, A2) de symétrie autour duquel ledit moyen support (20, 22) est entraîné en rotation est disposé perpendiculairement à la direction de déplacement dudit châssis (10).

3. Dispositif de coupe selon la revendication 1 ou 2, **caractérisé en ce que** ledit moyen support (20, 22) présente une surface externe (38) apte à recevoir lesdites premières extrémités (34) desdits moyens flexibles (32) formant lanières, ladite surface externe (38) s'étendant longitudinalement suivant ledit axe (A1, A2) de symétrie de façon que l'extrémité libre (36) desdites lanières, sensiblement radiales par rapport audit axe (A1, A2) de symétrie lorsque ledit moyen support (20, 22) formant tête est entraîné en rotation, décrivent des plans (P1, P2, P3) sensiblement parallèles entre eux, espacés les uns des autres et sensiblement orthogonaux audit axe de symétrie (A1, A2).

4. Dispositif de coupe selon l'une quelconque des revendications 1 à 3, **caractérisé en ce que** ledit moyen support (20, 22) formant tête se compose d'une pyramide octogonale tronquée (50) sur laquelle sont fixés lesdits moyens flexibles (32) formant lanières.

5. Dispositif de coupe selon la revendication 4, **caractérisé en ce que** ladite pyramide octogonale tronquée (50) présente, une grande base (52) fixée de manière démontable sur l'arbre desdits moyens moteurs (24, 26), une petite base (54) correspondant au sommet de ladite pyramide, et des parois latérales constituées de 8 trapèzes réguliers.

6. Dispositif de coupe selon l'une quelconque des revendications 1 à 3, **caractérisé en ce que** ledit moyen support (20, 22) formant tête comporte un élément de symétrie sensiblement hémisphérique, ledit axe de symétrie (A1, A2) étant sensiblement confondu avec l'axe de symétrie dudit élément et le sommet (42) dudit élément hémisphérique étant dirigé dans la direction opposée auxdits moyens moteurs (24, 26).

7. Dispositif de coupe selon l'une quelconque des revendications 1 à 5, **caractérisé en ce que** ledit moyen support formant tête présente des perçages (56) susceptibles de constituer des emplacements pour fixer des supports (57, 66) de lanière.

8. Dispositif de coupe selon la revendication 7, **caractérisé en ce que** ledit support (57) de lanière se compose, d'une vis (58) sur la tête (60) de laquelle est soudée une première plaque (62) percée en forme de U, d'une seconde plaque (64) percée en vis-à-vis de la première plaque (62) percée, ladite seconde plaque (64) percée étant susceptible de s'emboîter dans l'U et d'être boulonnée pour serrer ladite lanière

9. Dispositif de coupe selon la revendication 7, **caractérisé en ce que** ledit support (66) de lanière se compose d'une vis (68) dont la tige est creuse en son centre de façon à insérer un moyen flexible, ladite tige se prolongeant par un tube (69) comportant en son milieu un trou taraudé (70) par lequel passe une vis qui traverse de part en part ladite extrémité de ladite lanière et la maintient en position fixe.

10. Dispositif de coupe selon l'une quelconque des revendications 1 à 9, **caractérisé en ce que** lesdits moyens formant châssis (10) comportent deux moyens supports (20, 22) formant tête en regard l'un de l'autre, leurs axes (A1, A2) de symétrie étant inclinés l'un par rapport à l'autre de façon que les extrémités libres (36) de leurs lanières (32) respectives se croisent entre elles lorsqu'ils sont entraînés en rotation dans des sens opposés l'un de l'autre.

11. Dispositif de coupe selon l'une quelconque des revendications 1 à 10, **caractérisé en ce que** lesdits moyens formant châssis comprennent :
- un élément horizontal (72) susceptible d'être déplacé en translation au-dessus desdits végétaux ;
- deux bras verticaux (12, 14), présentant à chacune de leurs extrémités inférieures un moyen support (20, 22) formant tête, et reliés chacun audit élément horizontal (72) de façon que les moyens supports (20, 22) formant tête soient en regard l'un de l'autre ; et,
- des moyens de déplacement (76) susceptibles d'écarter lesdits bras verticaux (12, 14) l'un de l'autre, par quoi les moyens supports (20, 22) formant tête sont écartés l'un de l'autre.

12. Dispositif de coupe selon l'une quelconque des revendications 1 à 10, **caractérisé en ce que** lesdits moyens formant châssis comprennent :
- un élément horizontal (72) susceptible d'être déplacé en translation au-dessus desdits végétaux ;
- deux bras verticaux (12, 14), présentant à chacune de leurs extrémités inférieures un moyen support (20, 22) formant tête, et reliés chacun par une pièce (84, 86) formant bielle audit élément horizontal (72) de façon que les moyens supports (20, 22) formant tête soient en regard l'un de l'autre ; et,
- des moyens de déplacement (76) susceptibles d'écarter lesdites bielles (84, 86) l'une de l'autre, par quoi les moyens supports (20, 22) formant tête sont susceptibles d'être écartés l'un de l'autre et rapprochés dudit élément horizontal (72).
